# EUROPEAN PATENT SPECIFICATION

(11) **EP 3 014 228 B1**
(45) Date of publication and mention of the grant of the patent: **13.01.2021**
(21) Application number: 14744181.0
(22) Date of filing: 25.06.2014
(51) Int. Cl.: G01J 3/50, G01J 3/28, G01J 3/10, B07C 5/342, B28B 17/00, G01N 21/898, G01N 21/17, G01N 21/89

(54) **A METHOD FOR SCANNING A COLOURED SURFACE OF A TILE**
VERFAHREN ZUM ABTASTEN EINER FARBIGEN OBERFLÄCHE EINER FLIESE
PROCÉDÉ DE BALAYAGE DE SURFACE COLORÉE D'UNE TUILE

(30) Priority: 26.06.2013 IT BO20130332
(43) Date of publication of application: 04.05.2016
(73) Proprietor: Nuova Sima S.p.A., 40026 Imola (BO) (IT)
(72) Inventor: BARDI, Maurizio, I-41043 Formigine (Modena) (IT)
(74) Representative: Dall'Olio, Christian
(86) International application number: PCT/IB2014/062591
(87) International publication number: WO 2014/207675

(56) References cited:
- EP-A2- 1 591 761
- EP-A2- 1 591 761
- GB-A- 2 349 215
- GB-A- 2 349 215
- US-A1- 2002 191 183
- US-A1- 2002 191 183
- US-B1- 6 172 356
- US-B1- 6 172 356

## Description

### FIELD OF INVENTION

The present invention relates to the technical sector concerning the acquisition of coloured images; in particular, the invention relates to a method for scanning a coloured surface of a tile and a device for actuating the method.

### DESCRIPTION OF THE PRIOR ART

A scanning device of a coloured surface of a tile in movement is known: a lamp emitting a light containing all the colours in the visible range which is arranged such as to illuminate at least a surface band of a coloured surface to be scanned of a tile in movement; and a tri-linear camera for acquiring the image of the illuminated surface band of the coloured surface of the tile in movement.

The tri-linear camera comprises a matrix of photodetectors, which is formed in turn by three parallel rows of photodetectors on which are positioned, respectively, a red filter, a green filter and a blue filter. A coloured filter of the above-described type is a bandpass filter centred on a determined frequency; for example the red filter allows only passage of light having a light emission spectrum attributable to the red colour (about from 630 nm to 700nm).

The tile moves in continuous motion in a direction that is perpendicular to the row of photodetectors.

The colour filters occupy a certain amount of space, and this makes it necessary to distance the rows of photodetectors from one another in order to prevent the colour filters from superposing on one another in a row of photodetectors; in particular, each row of photodetectors is distanced from an adjacent row of photodetectors by a multiple of the width of a pixel of the image to be scanned, with the aim of facilitating the subsequent reconstruction of the image by appropriately mixing the colours red, green and blue. If, for example, this distance is five pixels, a specific pixel of the image to be scanned will first be acquired in red (the red filter will enable only red light to reach the corresponding row of photodetectors faced to the red filter), then five temporal scanning intervals after it will be acquired in green and another five temporal scanning intervals after it will be acquired in blue; thus the same pixel is scanned in three different temporal scanning intervals. Thereafter a special software program will reconstruct the image of the coloured surface of the tile by grouping together the colour information (red, green, blue) of each pixel.

To prevent formation of artifacts in the reconstruction of a scanned image, it is important to guarantee: an optimal synchronization between advancement of the tile and acquisition of the image by the television camera; a precise perpendicularity between rows of photodetectors and movement of direction of the tile; and that the distance between a row of photodetectors and the adjacent one is exactly equal to a multiple of the width of a pixel.

As is known, even slight displacements between these specifications lead to the formation of artifacts that are greater in number in accordance with the distance between adjacent rows of photodetectors; in the prior art the distance between adjacent rows of photodetectors has fallen to a value of about four-to-five times the dimensions of a pixel thanks to the miniaturization of the colour filters. However this distance value of the rows of photodetectors is not yet felt to be satisfactory; thus experimentation is tending towards the designing of colour filters that are even smaller.

Documents EP 1.591.761 A2 and US2002/191183A1 describe scanning device for scanning a coloured surface of a moving article.

### SUMMARY OF THE INVENTION

The aim of the present invention consists in reducing the formation of artifacts.

The aim is obtained by means of a method for scanning a coloured surface of a tile according to claim 1.

The prior-art lamp which does not emit a light containing all the visible colours is replaced by the use of a plurality of lamps which each emit a light with a determined light emitting spectrum: for example it is possible to choose three lamps which switch on cyclically such as to emit a red light, then a green light and finally a blue light; this makes the use of coloured filters located in front of the rows of photodetectors superfluous, which advantageously enables a significant reduction in the distance between the rows of photodetectors and thus a reduction in the formation of artifacts. It is even possible to arrange the photodetectors in such a way that they border one another (namely that they are distant, for example, of a single pixel only); in particular, a sub-matrix of an area sensor of a 2D CMOS area camera can be used for optimal performance.
A scanning device of known type can be located downstream of a colouring apparatus of a tile in order to perform verifications of quality: if the scanned image by the device displaces from a reference image, the tile is rejected as being non-conforming. The colouring defect of the tile can derive from an erroneous mixture of colours: for example an ink can be released in an excessive or insufficient quantity onto the tile. If the apparatus comprises three ink release units, which release respectively a red, green or blue ink, then with the use of a tri-linear camera it is possible to trace the quantity of ink released by each release unit; this would enable identification of the ink release unit which has emitted the erroneous quantity of ink.
Instead, where the apparatus uses ink release units that release inks of different colours from red, green and blue, or in a case where the release units are present in a greater number than three such as to release a same number of coloured inks, the tri-linear camera is no longer able to recognise a defective ink release unit.
The method of the invention of claim 1 advantageously enables obviating this drawback: in fact it is possible to use the lamps which each emit a light distinguished by a colour corresponding to the colour of the inks used in the apparatus, without limits to the number of lamps usable.
With the method according to the invention of claim 1 is possible to adapt the scanning device to the type of scanning required as it is possible to increase or reduce the number of lamps and/or replace them with others emitting lights of different colour. Instead, in the prior art the miniaturization attained by the tri-linear cameras would not have enabled replacement of the coloured filters and it would have been necessary to replace the tri-linear camera.

### BRIEF DESCRIPTION OF THE DRAWINGS

Specific embodiments of the invention will be described in the following part of the present description, according to what is set down in the claims and with the aid of the appended tables of drawings, in which:
- figure 1 schematically illustrates, and in a lateral view, a tile transported by a conveyor and an overlying device for scanning a coloured surface of the tile, which device is used by the method object of the present invention;
- figure 2 is a view from above, in larger scale, of the detail K of figure1;
- figure 3 schematically represents, in larger scale, a sub-matrix of an area sensor of a television camera which can be a part of the device used by the method of the invention;
- figure 4 is a representation of the light emitting spectrum of seven LED lamps which emit lights corresponding to 7 colours of the visible spectrum;
- figures 5-11 illustrate a larger-scale view of figure 2 in seven consecutive temporal scanning intervals.

### DESCRIPTION OF PREFERRED EMBODIMENTS

With reference to the appended tables of drawings, (1) denotes in its entirety a device for scanning a coloured surface of a tile, used by the method object of the present invention.

The device (1) for scanning a coloured surface (2) of a tile (3) comprises a matrix of photodetectors (4) comprising a plurality of rows of photodetectors (5) which are parallel and placed side by side, the matrix of photodetectors (4) does not comprise any colour filter above the photodetectors (4) and the rows of photodetectors (5) are near each other and spaced by a distance equal to at least one pixel only; the matrix of photodetectors (4) being arranged such as to acquire, in synchrony with a temporal scanning interval, an image of a surface band (6) of a coloured surface (2) to be scanned of a tile (3). The device further comprises a plurality of lamps (7) each having a light emission spectrum different from the light emission spectrum of another lamp of the plurality of lamps (7); the lamps of the plurality of lamps (7) being arranged such as to illuminate the surface band (6) of the coloured surface (2) to be scanned of the tile (3); the lamps of the plurality (7) being commandable to switch on at least one at a time at each temporal scanning interval. The device (1) further comprises conveyor means (8) (for example, a conveyor belt) provided for restingly receive and transport the tile (3) to be scanned and for determining a relative movement between the tile (3), on one side, and the matrix of photodetectors (4) and the plurality of lamps (7), on the other side, in a movement direction which is perpendicular to the plurality of rows of photodetectors (5) such that for each surface band (6) of the coloured surface (2) of the tile (3) to be scanned a predetermined number of images is acquired. Therefore, the plurality of rows of photodetectors (5) of the matrix of photodetectors (4) is arranged so that each row of photodetectors (5) is transversal, in particular perpendicular, to the transport direction of the tile (3) resting on the conveyor means (8).

Preferably, the rows of photodetectors (5) are spaced from each other by a distance equal to a pixel only; in case the rows of photodetectors (5) may be spaced from each other by a distance equal to an multiple integer of a pixel.

In general, one or more lamps (7) can emit significant power at some identical wavelengths. However, as long as the emissions are different at other wavelengths then the lamps (7) will provide useful information. There can be some emission by at least one lamp (7) at all wavelengths of interest.

The photodetectors matrix (4) is arranged such as to acquire, at each temporal scanning interval, an image of a surface band (6) of the coloured surface (2) to be scanned of the tile (3).

The lamps of the plurality of lamps (7) are commandable to switch on one at a time at each temporal scanning interval.

The device (1) used by the method of the invention can comprise optical means, not illustrated as of known type, which are arranged along the optical pathway comprised between the surface band (6) and the matrix of the photodetectors (4). The image of the surface band (6) of the coloured surface (2) of the tile (3) can be acquired from the photodetectors matrix (4) using the optical means. In other words, each row of photodetectors is able to detect the image of an elementary strip of coloured surface that is a part of the surface band (6). There exists therefore a relation between the width of the surface band (6) and the number of rows of photodetectors (5): on increasing the number of rows of photodetectors (5) the width of the surface band (6) grows, and on increasing the number of photodetectors for each row of photodetectors (9) the length of the surface band (6) grows, which is always preferably equal to or greater than the width of the coloured surface (2) of the tile (3) to be scanned.

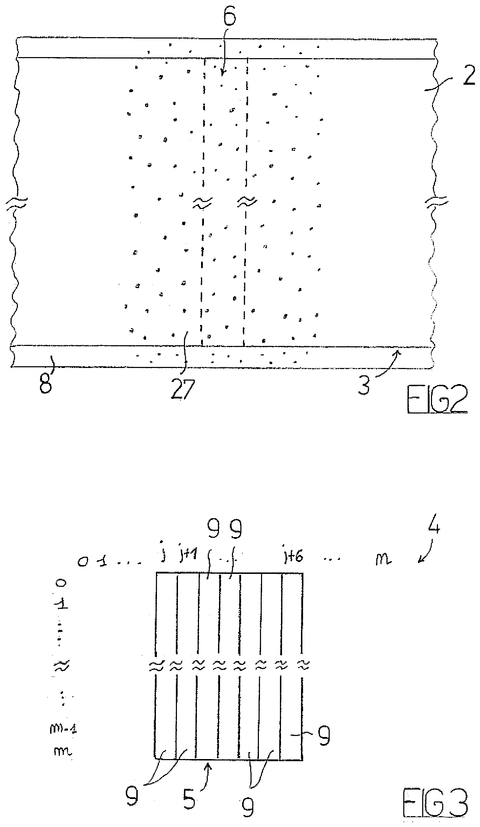

The tile (3) represented in the appended figures is for example a tile having a coloured surface (2) (facing upwards) to be scanned having a constant width; the surface band (6), see in particular figure 2, has been represented with a rectangle in a broken line having a length equal to the width of the coloured surface (2).

Each lamp of the plurality of lamps (7) is preferably arranged such as to illuminate a portion of surface (27) of the coloured surface (2) of the tile (3); this portion of surface (27) comprises the surface band (6) and has been represented by a dotted pattern, see for example figure 2.

The rows of photodetectors (5) are arranged as close as possible to one another so as to minimize the formation of artifacts (see figure 3). This is possible thanks to the fact that the matrix of photodetectors (4) does not include any colour filter above the photodetectors (4). Consequently, the distance between rows of adjacent photodetectors (5) is advantageously no longer influenced (as it was in the prior art) by the presence of colour filters arranged above of each row of photodetectors (9). Therefore the distance between adjacent rows of photodetectors (5) can be of only one pixel; it is therefore not necessary to distance a row of photodetectors (9) from an adjacent row of photodetectors (9) by a whole multiple of a width of a pixel (such a choice is possible, but not required).

The device (1) preferably comprises a 2D CMOS area sensor camera (10) which incorporates the above-cited photodetectors matrix (4); in other words, the matrix of photodetectors (4) is a sub-matrix of the matrix of photodetectors (4) of the area sensor of the camera (10).

The matrix of photodetectors (4) of the area sensor of the camera (10) can comprise a number "n" of rows of photodetectors (5) and a number "m" of lines of photodetectors, while the sub-matrix of photodetectors (4) can comprise a lower number (seven in the example) of rows of photodetectors (5) denoted by "j, j+1,.., j+6" in figure 3.

The lamps of the plurality of lamps (7) are preferably LEDs.

Preferably, the LEDs emit lights of different colour with respect to each other. Preferably, the LEDs have light emission spectrums equidistanced to each other in order to uniformly cover a predefined range of frequencies.

Preferably, such predefined range of frequencies is between 400nm and 750nm.

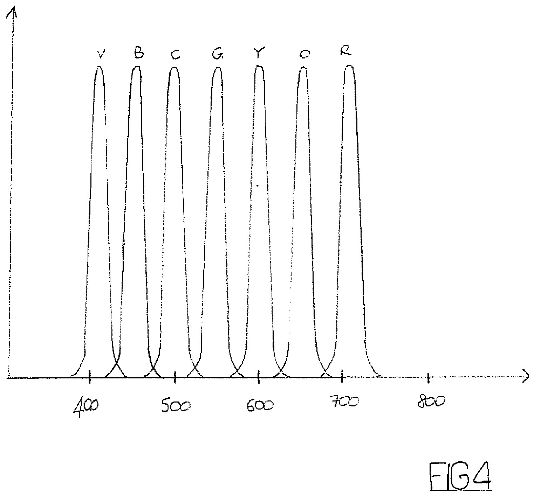

By way of example, figure 4 illustrates the light emission spectrum of seven LED lamps which emit corresponding lights respectively to red (R), orange (O), yellow (Y), green (G), cyan (C), blue (B) and violet (V): the x-axis gives the wavelength in nanometers while the y-axis indicates the light intensity. Each LED has a bandwidth of 50nm and therefore the use of the seven LEDs discussed above can cover a bandwidth ranging between 400nm and 750nm.The number and bandwidth of LEDs used can obviously be different.

The method for scanning a coloured surface (2) of a tile (3), object of the present invention, comprises steps of: providing a matrix of photodetectors (4) comprising a plurality of rows of photodetectors (5) which are parallel and placed side by side, the matrix of photodetectors (4) does not comprise any colour filter above the photodetectors (4) and the rows of photodetectors (5) are near each other and spaced by a distance equal to at least one pixel only; positioning the matrix of photodetectors (4) such as to acquire an image of a surface band (6) of a coloured surface (2) to be scanned of a tile; commanding the matrix of photodetectors (4) such as to acquire the image of the surface band (6) in synchrony with a temporal scanning interval; providing a plurality of lamps (7) each having a light emission spectrum different from the light emission spectrum of a further lamp of the plurality of lamps (7); positioning the plurality of lamps (7) such as to illuminate the surface band (6) of the coloured surface (2) to be scanned of the tile (3); commanding the lamps of the plurality of lamps (7) to switch on at least one at a time for each temporal scanning interval; providing conveyor means (8) for restingly receive and transport the tile (3) to be scanned and for determining a relative movement between the tile (3), on one side, and the matrix of photodetectors (4) and the plurality of lamps (7), on the other side, in a movement direction which is perpendicular to the plurality of rows of photodetectors (5) such that for each surface band (6) of the coloured surface (2) to be scanned of the tile (3) a predetermined number of images is acquired.

The lamps of the plurality of lamps (7) are preferably commanded to switch on one at a time in a cyclic sequence and for each surface band (6) of the coloured surface (2) to be scanned of the tile (3) a number of images equal to the number of lamps is acquired.

The matrix of photodetectors (4) is preferably commanded to acquire the image of the surface band (6) at each temporal scanning interval.

The tile (3) is preferably in movement while the matrix of photodetectors (4) and the plurality of lamps (7) are fixed.

There follows a description and the functioning of the device (1) according to the method of the present invention.

The plurality of lamps (7) comprises seven LEDs which switch on one at a time with a cyclic sequence; the LEDs emit lights corresponding respectively to red, orange, yellow, green, cyan, blue and violet (see figure 4). The LEDs are arranged to illuminate a portion of surface (27) of the coloured surface (2) of the tile (3) comprising the surface band (6) of the coloured surface (2) of the tile (3).

The device (1) comprises a 2D CMOS area sensor camera (10) which actively uses only a sub-matrix of photodetectors (4) having seven rows of adjacent photodetectors (5) denoted as "j, j+1,.., j+6" (see figure 3).

In a first comparative example, the tile (3) is moved in stepped motion: it remains stationary during a switching-on cycle of the LEDs and at the end of the switching-on cycle the conveyor means (8) are activated so as to move the tile (3) by a step which is equal to the width of the surface band (6). At each switching-on cycle of the LEDs, the sub-matrix of the photodetectors (4) acquires as many images of the surface band (6) as there are LEDs; the resulting data can be combined subsequently to complete the reconstruction of the image of the surface band (6). The number of rows of photodetectors (5) can also be less than seven; in this case the width of the surface band (6) will be reduced.

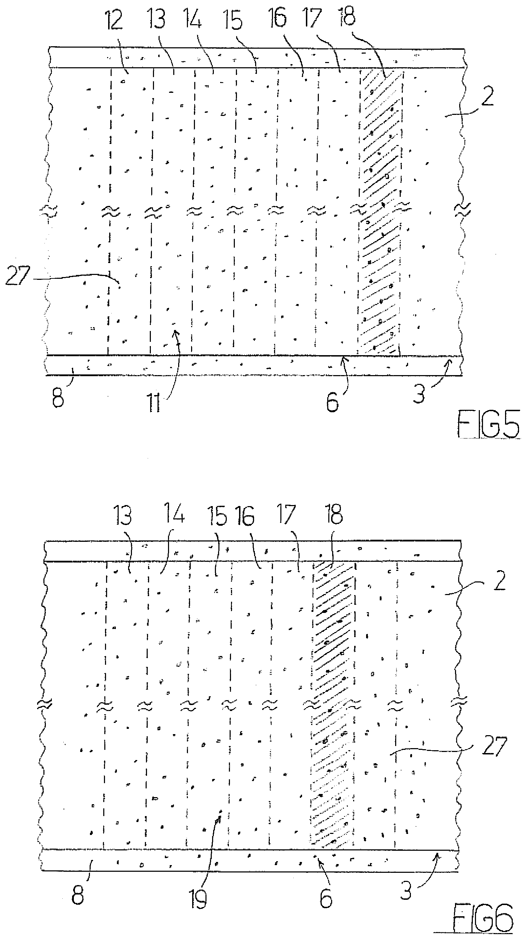

In an embodiment of the invention, Ilustrated in figures 5-11, the conveyor means (8) are activated so as to displace the tile (3) in a stepped motion. In this case too the velocity is such that at each switching-on cycle of the LEDs the conveyor means (8) have moved the tile (3) so as the tile (3) is wholly displaced by a quantity equal to the width of the surface band (6): specifically, each step corresponding to the width of an elementary strip. Figures 5-11 clarify how it is possible to reconstruct the image of an elementary strip of coloured surfaces (2) of the tile (3), as described in the following.

At a first temporal scanning interval t₁ a first LED is switched on to emit a red light (11) (denoted in dots) and the remaining LEDs are switched off. The sub-matrix (4) acquires the image of a first surface band (6) as follows: a first row of photodetectors (j) acquires the image of a first elementary strip (12) of the coloured surface (2) of the tile (3); a second row of photodetectors (j+1) acquires the image of a second elementary strip of the coloured surface (2) of the tile (3), which is adjacent to the first elementary strip (12); a third row of photodetectors (j+2) acquires the image of a third elementary strip (14) of the coloured surface (2) of the tile (3) which is adjacent to the second elementary strip (13); a fourth row of photodetectors (j+3) acquires the image of a fourth elementary strip (15) of the coloured surface (2) of the tile (3) which is adjacent to the third elementary strip (14); a fifth row of photodetectors (j+4) acquires the image of a fifth elementary strip (16) of the coloured surface (2) of the tile which is adjacent to the fourth elementary strip (15); a sixth row of photodetectors (j+5) acquires the image of a sixth elementary strip (17) of the coloured surface (2) of the tile (3) which is adjacent to the fifth elementary strip (16); a seventh row of photodetectors (j+6) acquires the image of a seventh elementary strip (18) (in the figures 5-11 denoted with lining) of the coloured surface (2) of the tile (3) which is adjacent to the sixth elementary strip (17) (see figure 5).

At a second temporal scanning interval t₂ which follows the first temporal scanning interval t₁, the first LED is switched off and a second LED is switched on to emit an orange light (19); further, the conveyor means (8) are activated so as to move the tile (3) of one step corresponding to a width of an elementary strip so that the image of the seventh elementary strip (18) is acquired by the sixth row of photodetectors (j+5); see figure 6.

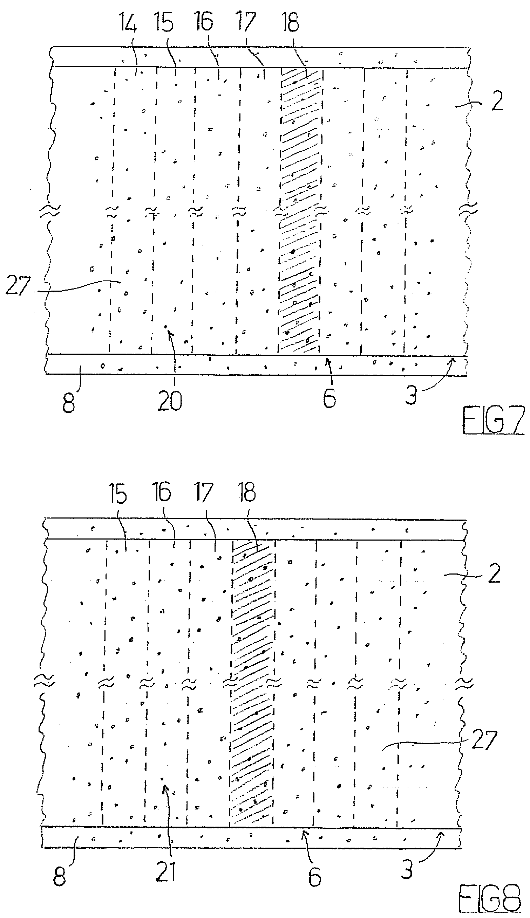

At a third temporal scanning interval t₃ which follows the second temporal scanning interval t₂, the second LED is switched off and a third LED is switched on to emit a yellow light (20); then, the conveyor means (8) are activated so as to displace the tile (3) of a further step so that the image of the seventh elementary strip (18) is acquired by the fifth row of photodetectors (j+4); see figure 7.

At a fourth temporal scanning interval t₄ which follows the third temporal scanning interval t₃, the third LED is switched off and a fourth LED is switched on to emit a green light (21); then, the conveyor means (8) are activated so as to move the tile (3) of a further step so that the image of the seventh elementary strip (18) is acquired by the fourth row of photodetectors (j+3); see figure 8.

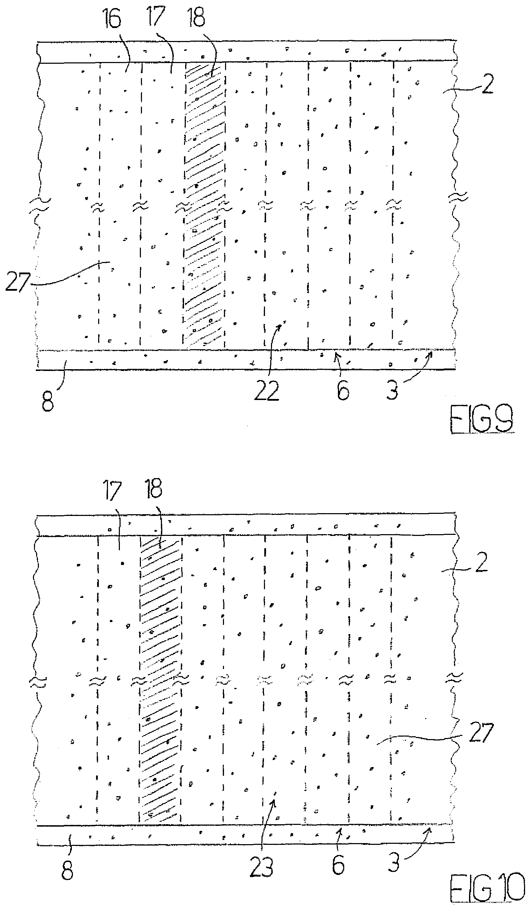

At a fifth temporal scanning interval t₅ which follows the fourth temporal scanning interval t₄, the fourth LED is switched off and a fifth LED is switched on to emit a cyan light (22); after that, the conveyor means (8) are activated so as to move the tile (3) of a further step so that the image of the seventh elementary strip (18) is acquired by the third row of photodetectors (j+2); see figure 9.

At a sixth temporal scanning interval t₆ which follows the fifth temporal scanning interval t₅, the fifth LED is switched off and a sixth LED is switched on to emit a blue light (23); then, the conveyor means (8) are activated so as to move the tile (3) of a further step so that the image of the seventh elementary strip (18) is acquired by the second row of photodetectors (9)(j+1); see figure 10.

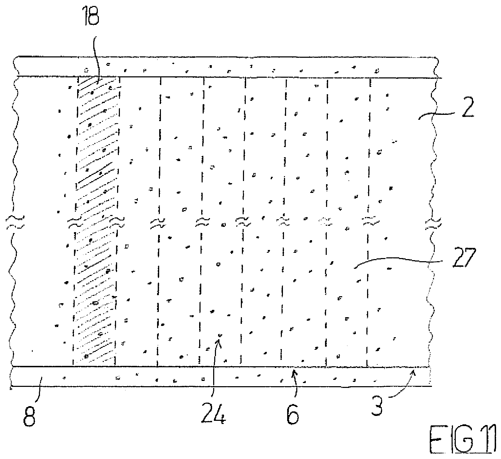

At a seventh temporal scanning interval t₇ which follows the sixth temporal scanning interval t₆, the sixth LED is switched off and a seventh LED is switched on to emit a violet light (24); then, the conveyor means (8) are activated so as to move the tile (3) of a further step so that the image of the seventh elementary strip (18) is acquired by the first row of photodetectors (j); see figure 11.

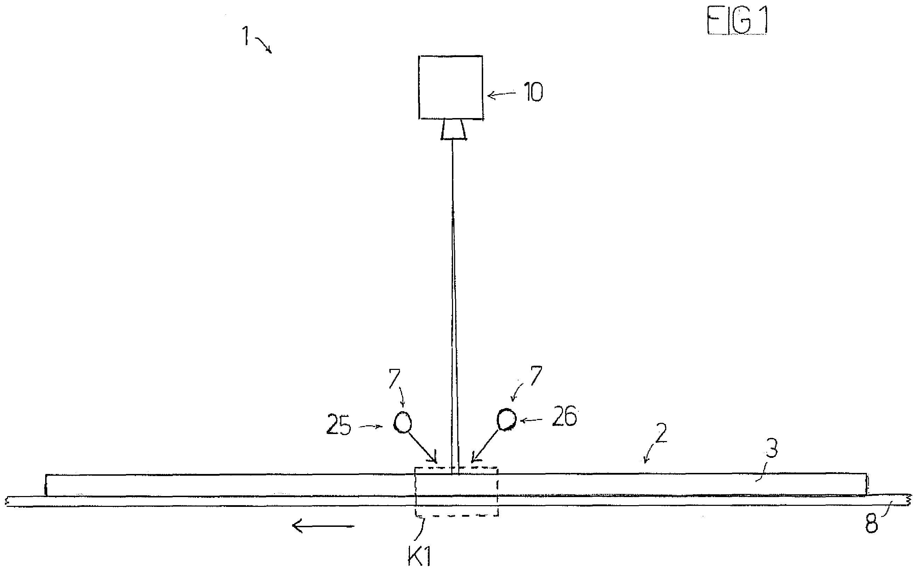

The images acquired by the sub-matrix of photodetectors (4) in a switching-on cycle of the LEDs thus enable reconstructing the image of the seventh elementary strip (18). A like description could be made for the other elementary strips, which form the coloured surface (2) of the tile (3), with the aim of reconstructing the image of the whole coloured surface (2) of the tile (3). To optimise the illumination of the surface band (6) of the coloured surface (2) of the tile (3) the lamps can be duplicated and arranged symmetrically with respect to the surface band (6); in other words, the device (1) can comprise not only a first group (25) of LEDs made up of seven LEDs which emit the red, orange, yellow, green, cyan, blue and violet, but also a second group (26) of LEDs which is identical to the first group, see figure 1. Thus, at each temporal scanning interval a LED of the first group (25) is switched on and a LED of the second group (26) is switched on to gradually emit the red, orange, yellow, green, cyan, blue and violet.

The above is understood to have been described by way of non-limiting example, and any constructional variants are understood to fall within the protective scope of the present technical solution, as claimed in the following.

## Claims

1. A method for acquiring a coloured image by scanning a coloured surface (2) of a tile (3), comprising steps of:
providing a matrix of photodetectors (4) comprising a plurality of rows of photodetectors (5) which are parallel and placed side by side, the matrix of photodetectors (4) does not comprise any colour filter above the photodetectors (4) and the rows of photodetectors (5) are near each other and spaced by a distance equal to at least one pixel, wherein each row of photodetectors (4) is able to detect the image of an elementary strip of a surface band (6) of a coloured surface (2) to be scanned of a tile;
positioning the matrix of photodetectors (4) such as to acquire an image of the surface band (6) of a coloured surface (2) a tile (3), with each row of photodetectors such as to acquire the image of a corresponding elementary strip of the surface band
commanding the matrix of photodetectors (4) such as to acquire the image of the surface band (6) in synchrony with a temporal scanning interval, wherein for each temporal scanning interval each row of photodetectors acquires the image of a corresponding elementary strip of the surface band;
providing a plurality of lamps (7) each having a light emission spectrum different from the light emission spectrum of a further lamp of the plurality of lamps (7);
positioning the plurality of lamps (7) such as to illuminate the surface band (6) of the coloured surface (2) to be scanned of the tile (3);
commanding the lamps of the plurality of lamps (7) in a switching-on cycle sequence wherein only one of the lamps at a time is commanded to switch on for each temporal scanning interval;
providing conveyor means (8) for restingly receive and transport the tile (3) to be scanned and for determining a relative movement between the tile (3), on one side, and the matrix of photodetectors (4) and the plurality of lamps (7), on the other side, in a movement direction which is perpendicular to the plurality of rows of photodetectors (5) such that for each surface band (6) of the coloured surface (2) to be scanned of the tile (3) a predetermined number of images is acquired,
J wherein the conveyor means (8) are activated so as to displace the tile (3) in a stepped motion after each temporal scanning interval, with each step corresponding to the width of an elementary strip of the surface band so that for each switching-on cycle of the lamps the conveyor means (8) move the tile (3) so as the tile (3) is wholly displaced by a quantity equal to the width of the surface band (6) so that the image of each elementary strip of the surface band is successively acquired by all the rows of photodetectors.

## Patentansprüche

1. Verfahren zum: Aufnehmen eines Farbbildes durch Abtasten einer farbigen Oberfläche (2) einer Fliese (3), folgende Schritte umfassend:
Bereitstellen einer Matrix von Fotodetektoren (4), die mehrere Reihen von Fotodetektoren (5) umfasst, die parallel zueinander und Seite an Seite nebeneinander angeordnet sind, wobei die Matrix von Fotodetektoren (4) keinen Farbfilter über den Fotodetektoren (4) beinhaltet und die Reihen von Fotodetektoren (5) nahe beieinander und in einem Abstand von mindestens einem Pixel zueinander angeordnet sind, wobei jede Reihe von Fotodetektoren (4) geeignet ist, das Bild eines elementaren Streifens eines Oberflächenbandes (6) einer abzutastenden farbigen Oberfläche (2) einer Fliese zu erfassen;
Positionieren der Matrix von Fotodetektoren (4), um ein Bild des Oberflächenbandes (6) einer farbigen Oberfläche (2) einer Fliese (3) aufzunehmen, wobei jede Reihe von Fotodetektoren dafür ausgelegt ist, das Bild eines entsprechenden elementaren Streifens des Oberflächenbandes aufzunehmen;
Ansteuern der Matrix von Fotodetektoren (4), um das Bild des Oberflächenbandes (6) synchron mit einem zeitlichen Abtastintervall aufzunehmen, wobei für jedes zeitliche Abtastintervall jede Reihe von Fotodetektoren das Bild eines entsprechenden elementaren Streifens des Oberflächenbandes aufnimmt;
Bereitstellen einer Vielzahl von Lampen (7), die jeweils ein Lichtemissionsspektrum aufweisen, das verschieden von dem Lichtemissionsspektrum einer weiteren Lampe der Vielzahl von Lampen (7) ist;
Positionieren der Vielzahl von Lampen (7), um das Oberflächenband (6) der abzutastenden farbigen Oberfläche (2) der Fliese (3) zu beleuchten;
Ansteuern der Lampen der Vielzahl von Lampen (7) in einer zyklischen Einschaltsequenz, wobei für jedes zeitliche Abtastintervall jeweils nur das Einschalten einer der Lampen angesteuert wird;
Bereitstellen von Fördermitteln (8) zum liegenden Aufnehmen und Befördern der abzutastenden Fliese (3) und zum Bestimmen einer Relativbewegung zwischen der Fliese (3) einerseits und der Matrix von Fotodetektoren (4) und der Vielzahl von Lampen (7) andererseits in einer Bewegungsrichtung, die orthogonal zu der Vielzahl von Reihen von Fotodetektoren (5) verläuft, so dass für jedes Oberflächenband (6) der abzutastenden farbigen Oberfläche (2) der Fliese (3) eine vorgegebene Anzahl von Bildern aufgenommen wird,
wobei die Fördermittel (8) aktiviert werden, um die Fliese (3) in einer schrittweisen Bewegung nach jedem zeitlichen Abtastintervall zu verschieben, wobei jeder Schritt der Breite eines elementaren Streifens des Oberflächenbandes entspricht, so dass für jeden Einschaltzyklus der Lampen die Fördermittel (8) die Fliese (3) so bewegen, dass die Fliese (3) insgesamt um einen Betrag verschoben wird, der gleich der Breite des Oberflächenbandes (6) ist, so dass das Bild jedes elementaren Streifens des Oberflächenbandes nacheinander von allen Reihen von Fotodetektoren aufgenommen wird.

## Revendications

1. Un procédé pour acquérir une image colorée par balayage d'une surface colorée (2) d'un carreau (3), comprenant les étapes consistant à :
fournir une matrice de photodétecteurs (4) comprenant une pluralité de rangées de photodétecteurs (5) qui sont parallèles et placées côte à côte, la matrice de photodétecteurs (4) ne comprend aucun filtre de couleur au-dessus des photodétecteurs (4) et les rangées de photodétecteurs (5) sont l'une à côté de l'autre et espacées d'une distance égale à au moins un pixel, où chaque rangée de photodétecteurs (4) est destinée à détecter l'image d'une bande élémentaire d'une bande de surface (6) d'une surface colorée (2) à balayer d'un carreau ;
positionner la matrice de photodétecteurs (4) de manière à acquérir une image de la bande de surface (6) d'une surface colorée (2) d'un carreau (3), avec chaque rangée de photodétecteurs qui est telle qu'elle acquiert l'image d'une bande élémentaire correspondante de la bande de surface ;
commander la matrice de photodétecteurs (4) de manière à acquérir l'image de la bande de surface (6) en synchronisation avec un intervalle temporel de balayage, où pour chaque intervalle temporel de balayage chaque rangée de photodétecteurs acquiert l'image d'une bande élémentaire correspondante de la bande de surface ;
fournir une pluralité de lampes (7) ayant chacune un spectre d'émission lumineuse différent du spectre d'émission lumineuse d'une autre lampe de la pluralité de lampes (7) ;
positionner la pluralité de lampes (7) de manière à illuminer la bande de surface (6) de la surface colorée (2) à balayer du carreau (3) ;
commander les lampes de la pluralité de lampes (7) selon une séquence de cycle d'allumage où seule une des lampes à la fois est commandée pour s'allumer à chaque intervalle temporel de balayage ;
fournir des moyens de transport (8) pour recevoir en appui et transporter le carreau (3) à balayer et pour déterminer un mouvement relatif entre le carreau (3), d'une part, et la matrice de photodétecteurs (4) et la pluralité de lampes (7), d'autre part, dans une direction de mouvement qui est perpendiculaire à la pluralité de rangées de photodétecteurs (5) de manière à ce que, pour chaque surface de bande (6) de la surface colorée (2) à balayer du carreau (3), un nombre prédéfini d'images soit acquis,
où les moyens de transport (8) sont activés de manière à déplacer le carreau (3) avec un mouvement à pas après chaque intervalle temporel de balayage, avec chaque pas qui correspond à la largeur d'une bande élémentaire de la bande de surface de manière à ce que, pour chaque cycle d'allumage des lampes, les moyens de transport (8) déplacent le carreau (3) afin que le carreau (3) soit entièrement déplacé d'une quantité égale à la largeur de la bande de surface (6) pour que l'image de chaque bande élémentaire de la bande de surface soit successivement acquise par toutes les rangées de photodétecteurs.
